(19) **Europäisches Patentamt**
**European Patent Office**
**Office européen des brevets**

(11) **EP 2 716 023 B1**

(12) **EUROPEAN PATENT SPECIFICATION**

(45) Date of publication and mention of the grant of the patent:
**09.11.2016 Bulletin 2016/45**

(21) Application number: **11728103.0**

(22) Date of filing: **27.05.2011**

(51) Int Cl.:
*H04M 9/08* *(2006.01)*

(86) International application number:
**PCT/US2011/038340**

(87) International publication number:
**WO 2012/166092 (06.12.2012 Gazette 2012/49)**

(54) **CONTROL OF ADAPTATION STEP SIZE AND SUPPRESSION GAIN IN ACOUSTIC ECHO CONTROL**

STEUERUNG DER ANPASSUNGSSCHRITTWEITE UND UNTERDRÜCKUNGSVERSTÄRKUNG BEI DER AKUSTISCHEN ECHOSTEUERUNG

COMMANDE DE TAILLE DE PAS D'ADAPTATION ET DE GAIN DE SUPPRESSION DANS LA RÉGULATION D'ÉCHO ACOUSTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.04.2014 Bulletin 2014/15**

(73) Proprietor: **Google Inc.**
**Mountain View, CA 94043 (US)**

(72) Inventors:
• **VOLCKER, Bjorn**
**S-167 33 Bromma (SE)**

• **MACDONALD, Andrew John**
**San Francisco, California 94117 (US)**
• **SKOGLUND, Jan**
**San Francisco, California 94114 (US)**
• **BASTIAAN KLEIJN, Willem**
**5013 Lower Hutt (NZ)**

(74) Representative: **Boult Wade Tennant**
**Verulam Gardens**
**70 Gray's Inn Road**
**London WC1X 8BT (GB)**

(56) References cited:
**US-A1- 2004 264 686     US-A1- 2006 018 460**

**Description**

**FIELD OF THE INVENTION**

The present disclosure generally relates to systems and methods for transmission of audio signals such as voice communications. More specifically, aspects of the present disclosure relate to suppressing echo in transmitted audio signals.

**BACKGROUND**

Acoustic echo is generated when a signal output by a loudspeaker of a device (e.g., the far-end signal) is captured by a microphone of the device as part of the near-end signal and sent back to the far-end client who will perceive this signal as an echo. One approach to echo control, which aims to remove acoustic echo while affecting the real near-end speech as little as possible, is acoustic echo cancellation. Acoustic echo cancellation attempts to model the echo and subtract it from the near-end signal, thereby making it possible (given certain modeling constraints) to nearly entirely remove the echo without affecting near-end speech. While acoustic echo cancellation is an important component in real-time communications, for some types of devices (e.g., mobile devices) the implementation algorithms for acoustic echo cancellation are too computationally complex, or unreliable delay values prevent good synchronization between the far-end and near-end.

US patent application publication no. US 2004/264686 describes a statistical adaptive-filter controller for digital acoustic echo control in hands-free telephones for achieving more consistent echo cancellation results (i.e. higher output signal quality) and simpler realizations of Acoustic Echo Control (AEC) units. The improvement using the simple statistical adaptive-filter controller is accomplished by optimizing a joint control of an echo canceller and a postfilter.

US patent application publication no. US 2006/018460 describes hands-free phones with voice activity detection using a comparison of frame power estimate with an adaptive frame noise power estimate, automatic gain control with fast adaptation and minimal speech distortion, echo cancellation updated in the frequency domain with stepsize optimization and smoothed spectral whitening, and echo suppression with adaptive talking-state transitions.

**SUMMARY**

In accordance with aspects of the invention, there are provided a method of echo suppression and an echo suppressor, as recited in the accompanying claims.

This Summary introduces a selection of concepts in a simplified form in order to provide a basic understanding of some aspects of the present disclosure. This Summary is not an extensive overview of the disclosure, and is not intended to identify key or critical elements of the disclosure or to delineate the scope of the disclosure. This Summary merely presents some of the concepts of the disclosure as a prelude to the Detailed Description provided below.

One embodiment of the present disclosure relates to a method for echo suppression comprising: calculating, by an echo suppressor, energy of a far-end signal and energy of a near-end signal in a signal transmission path; adjusting a step size value of an adaptive filter algorithm using the calculated energy of the far-end signal; updating an estimate of an echo channel from the far-end signal to the near-end signal using the adaptive filter algorithm; estimating an echo in the near-end signal using the updated estimate of the filter algorithm; estimating an echo in the near-end signal using the updated estimate of the echo channel; deriving a suppression filter using the near-end signal and the estimated echo in the near-end signal, the suppression filter including a controllable suppression gain parameter based on an echo estimation error; and suppressing the estimated echo in the near-end signal using the suppression filter.

In another embodiment of the disclosure, the method for echo suppression further comprises: updating an adaptive echo channel estimate using the adaptive filter algorithm; comparing the updated adaptive echo channel estimate with a stored echo channel estimate; and selecting, based on the comparison, one of the updated adaptive echo channel estimate and the stored echo channel estimate for use in estimating the echo in the near-end signal.

In another embodiment of the disclosure, the method for echo suppression further comprises updating the controllable suppression gain parameter as a function of echo estimation errors and previous suppression gain parameters.

In another embodiment of the disclosure, the method for echo suppression further comprises calculating the controllable suppression gain parameter using a function of the difference between the energy of the near-end signal and the energy of the estimated echo in the near-end signal.

Another embodiment of the disclosure relates to an echo suppressor comprising: a channel estimation unit configured to calculate energy of a far-end signal and energy of a near-end signal in a signal transmission path, adjust a step size value of an adaptive filter algorithm using the calculated energy of the far-end signal, update an estimate of an echo channel from the far-end signal to the near-end signal using the adaptive filter algorithm, and estimate an echo in the near-end signal using the updated estimate of the echo channel; and a suppression filter unit configured to: derive a suppression filter using the near-end signal and the estimated echo in the near-end signal, the suppression filter including a controllable suppression gain parameter based on an echo estimation error, and suppress the estimated echo in the near-end signal using the suppression filter.

In another embodiment of the disclosure, the channel estimation unit of the echo suppressor is further configured to: update an adaptive echo channel estimate using the adaptive filter algorithm; compare the updated adaptive echo channel estimate with a stored echo channel estimate; and select, based on the comparison, one of the updated adaptive echo channel estimate and the stored echo channel estimate for use in estimating the echo in the near-end signal.

In another embodiment of the disclosure, the suppression filter unit of the echo suppressor is further configured to update the controllable suppression gain parameter as a function of echo estimation errors and previous suppression gain parameters.

In still another embodiment of the disclosure, the suppression filter unit of the echo suppressor is further configured to calculate the controllable suppression gain parameter using a function of the difference between the energy of the near-end signal and the energy of the estimated echo in the near-end signal.

In other embodiments of the disclosure, the methods and apparatus described herein may optionally include one or more of the following additional features: the step size value is adjusted as a function of the calculated energy of the far-end signal, the function being an increasing function within a range of energy values, the adaptive filter algorithm is a least mean squares type algorithm, the estimate of the echo channel is an estimate of a magnitude of the echo channel, the echo estimation error is a difference between energy of the estimated echo and the energy of the near-end signal, the function is a decreasing function, and/or the suppression filter is a Wiener type filter.

Further scope of applicability of the present invention will become apparent from the Detailed Description given below. However, it should be understood that the Detailed Description and specific examples, while indicating preferred embodiments of the invention, are given by way of illustration only, since various changes and modifications within the scope of the invention will become apparent to those skilled in the art from this Detailed Description.

## BRIEF DESCRIPTION OF DRAWINGS

These and other objects, features and characteristics of the present disclosure will become more apparent to those skilled in the art from a study of the following Detailed Description in conjunction with the appended claims and drawings, all of which form a part of this specification. In the drawings:

Figure 1 is a block diagram illustrating exemplary components of an acoustic echo suppressor in a representative environment according to one or more embodiments described herein.

Figure 2 is a flow chart illustrating an example process for echo channel estimation and suppression filter control according to one or more embodiments described herein.

Figure 3 is a graphical illustration showing an example step size function of an adaptive algorithm according to one or more embodiments described herein.

Figure 4 is a functional block diagram illustrating an example process for deriving a suppression filter according to one or more embodiments described herein.

Figure 5 is a graphical illustration showing an example function for calculating a suppression gain parameter according to one or more embodiments described herein.

Figure 6 is a functional block diagram illustrating an example energy-based suppression filter control process according to one or more embodiments described herein.

Figure 7 is a functional block diagram illustrating an example energy-based adaptive filter control process according to one or more embodiments described herein.

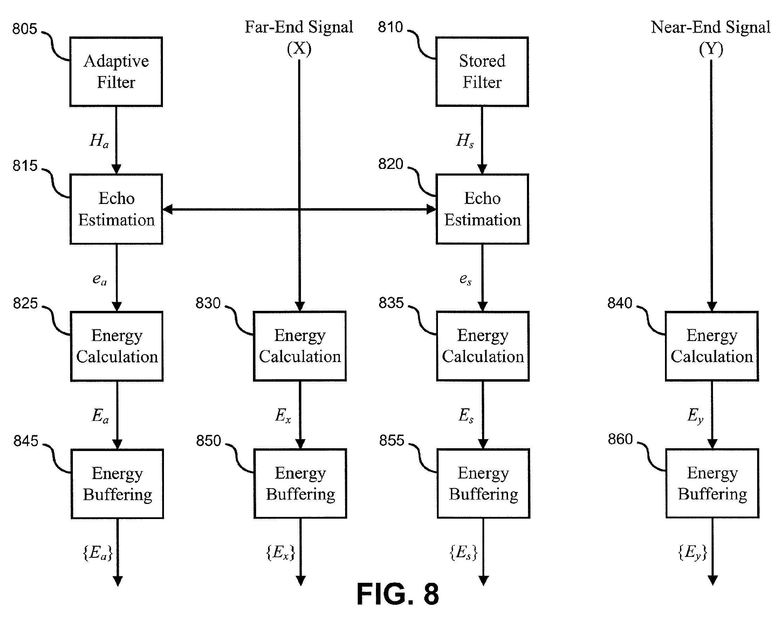

Figure 8 is a functional block diagram illustrating an example energy buffering process according to one or more embodiments described herein.

Figure 9 is a block diagram illustrating an example computing device arranged for multipath routing and processing of audio input signals according to one or more embodiments described herein.

The headings provided herein are for convenience only and do not necessarily affect the scope or meaning of the claimed invention.

In the drawings, the same reference numerals and any acronyms identify elements or acts with the same or similar structure or functionality for ease of understanding and convenience. The drawings will be described in detail in the course of the following Detailed Description.

## DETAILED DESCRIPTION

Various examples of the invention will now be described. The following description provides specific details for a thorough understanding and enabling description of these examples. One skilled in the relevant art will understand, however, that the invention may be practiced without many of these details. Likewise, one skilled in the relevant art will also understand that the invention can include many other obvious features not described in detail herein. Additionally, some well-known structures or functions may not be shown or described in detail below, so as to avoid unnecessarily obscuring the relevant description.

The present disclosure provides an echo control solution for mobile devices with performance comparable to acoustic echo cancellation, yet with lower complexity and maintained robustness to timing mismatches between far-end (e.g., loudspeaker) and near-end (e.g., microphone) signals. As will be further described below, aspects of the present disclosure relate to a frequency-domain approach to acoustic echo control where, rather than subtracting (or cancelling) the echo from the near-end signal as in acoustic echo cancellation, the echo is suppressed in the frequency domain. This acoustic echo suppression method, which in some embodiments may be implemented through an acoustic echo suppressor as part of a larger voice quality enhancement system or apparatus, has higher performance in comparison with a time-domain approach to acoustic echo suppression while also being less computationally complex than acoustic echo cancellation.

One or more embodiments of the present disclosure relates to an energy-based filter control system and algorithm for suppressing acoustic echo in a near-end audio signal (e.g., a microphone signal). Whereas some approaches to echo control, such as acoustic echo cancellation, subtract an estimate of the echo from the near-end signal, the echo control approach described herein suppresses the frequency bands of the near-end signal where echo is present.

The echo suppression operations are performed in the frequency-domain, and therefore filtering corresponds to multiplication. To perform the echo suppression operations described herein, an estimate of the echo in the near-end signal is needed. In at least one embodiment, this estimate of the echo is obtained from an estimate of the echo channel from the loudspeaker (e.g., the far-end) to the microphone (e.g., the near-end). The acoustic echo suppression algorithm of the present disclosure includes at least the following two main processes: (1) echo channel estimation; and (2) suppression filter construction. Each of these processes, as well as additional aspects and features of the algorithm, will be described in greater detail below.

In at least some embodiments described herein, an acoustic echo suppressor is configured to suppress acoustic echoes that result from propagation of soundwaves from a loudspeaker (which also may be referred to as an "audio render device" or, with regard to echo control, the "far-end") to a corresponding microphone (which also may be referred to as an "audio capture device" or the "near-end") of the same device. These soundwaves may travel in a direct path from the loudspeaker to the microphone, may reflect off surrounding surfaces, and/or may propagate within the device itself. The acoustic echo suppressor is configured to perform echo control operations in the frequency-domain by suppressing the frequency bands of the near-end signal where echo is present.

Additionally, the acoustic echo suppressor may be configured for voice and audio communications over packet-switched networks, and may operate in narrowband, wideband, and/or super-wideband modes. The acoustic echo suppressor may also be one component in a voice quality enhancement engine or system, which may also include additional interference suppression components or parts.

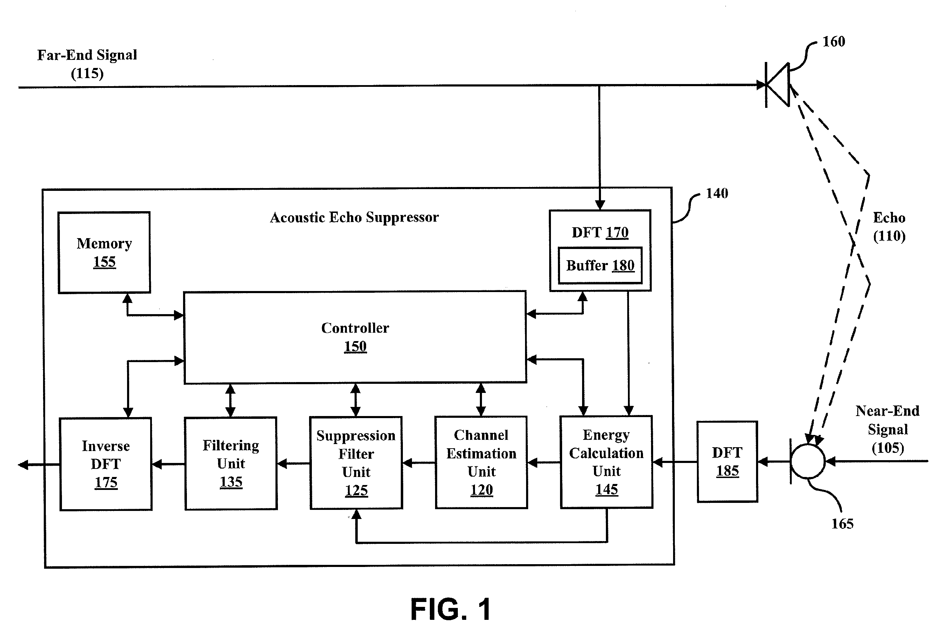

FIG. 1 illustrates an example acoustic echo suppressor 140 and an example environment in which the acoustic echo suppressor 140 may perform various operations and processes described herein.

The acoustic echo suppressor 140 may be located at the near-end environment of a signal transmission path, along with a capture device 165 also at the near-end and a render device 160 located at the far-end environment. In some arrangements, acoustic echo suppressor 140 may be one component in a larger system for audio (e.g., voice) communications, such as a voice quality enhancement system or engine. The acoustic echo suppressor 140 may be an independent component in such a larger system or may be a subcomponent within an independent component (not shown) of the system. In the example embodiment illustrated in FIG. 1, acoustic echo suppressor 140 is arranged to receive and process a near-end signal 105 from capture device 165 and generate output to, e.g., one or more other audio processing components (not shown). These other audio processing components may be noise suppression, automatic gain control (AGC), and/or other voice or audio quality improvement components. In some embodiments, these other processing components may receive the near-end signal 105 from capture device 165 prior to acoustic echo suppressor 140 receiving the signal.

Acoustic echo suppressor 140 is also arranged to receive far-end signal 115. In different arrangements, the far-end signal 115 input received at the acoustic echo suppressor 140 may include data, information, signals, etc., related to various characteristics of the far-end signal 115. For example, as will be described in greater detail below, the far-end signal 115 may include certain information used to calculate an energy of the far-end signal 115 (e.g., using energy calculation unit 145). The far-end signal 115 is also received at the render device 160 for generating audio (e.g., sound). As shown, output from render device 160 may include echo 110, which can travel from render device 160 to capture device 165. The echo 110 may be captured by the capture device 165 together with the near-end signal 105, such that a convoluted mixture of the echo 110 and the near-end signal 105 is input into the acoustic echo suppressor 140.

Capture device 165 may be any of a variety of audio input devices, such as one or more microphones configured to capture sound and generate input signals. Render device 160 may be any of a variety of audio output devices, including a loudspeaker or group of loudspeakers configured to output sound of one or more channels. For example, capture device 165 and render device 160 may be hardware devices internal to a computer system, or external peripheral devices connected to a computer system via wired and/or wireless connections. In some arrangements, capture device 165 and render device 160 may be components of a single device, such as a mobile telephone, speakerphone, portable telephone handset, etc. Additionally, one or both of capture device 165 and render device 160 may include analog-to-.digital and/or digital-to-analog transformation functionalities.

In at least the embodiment shown in FIG. 1, acoustic echo suppressor 140 includes a controller 150 for coordinating various processes and timing considerations among and between the components of acoustic echo suppressor 140. Acoustic echo suppressor 140 may also include an energy calculation unit 145, a channel estimation unit 120, a suppression filter unit 125, and a filtering unit 135. Each of these units or components may be in communication with controller 150 such that controller 150 can facilitate some of the processes described herein. Various details of the energy calculation unit 145, channel estimation unit 120, suppression filter unit 125, and filtering unit 135 will be further described below.

Additionally, the acoustic echo suppressor 140 may include a discrete Fourier Transform (DFT) component 170 and an inverse DFT component 175. DFT component 170 may be configured for transforming the far-end signal 115 from the time-domain to the frequency-domain when the far-end signal 115 is received at the acoustic echo suppressor 140 since the operations performed by the acoustic echo suppressor 140 occur in the frequency-domain. Inverse DFT component 175 may be configured to transform the echo-suppressed signal output by, for example, the filtering unit 135, from the frequency-domain back to the time-domain before the echo-suppressed signal is passed further along the near-end of the signal transmission path.

In some embodiments of the present disclosure, one or more other components, modules, units, etc., may be included as part of the acoustic echo suppressor 140, in addition to or instead of those illustrated in FIG. 1. For example, the acoustic echo suppressor 140 may include a memory 155 that may be configured to store instructions and data used by the controller 150. The names used to identify the units and components included as part of the acoustic echo suppressor 140 (e.g., energy calculation unit, channel estimation unit, suppression filter unit, etc.) are exemplary in nature, and are not in any way intended to limit the scope of the disclosure.

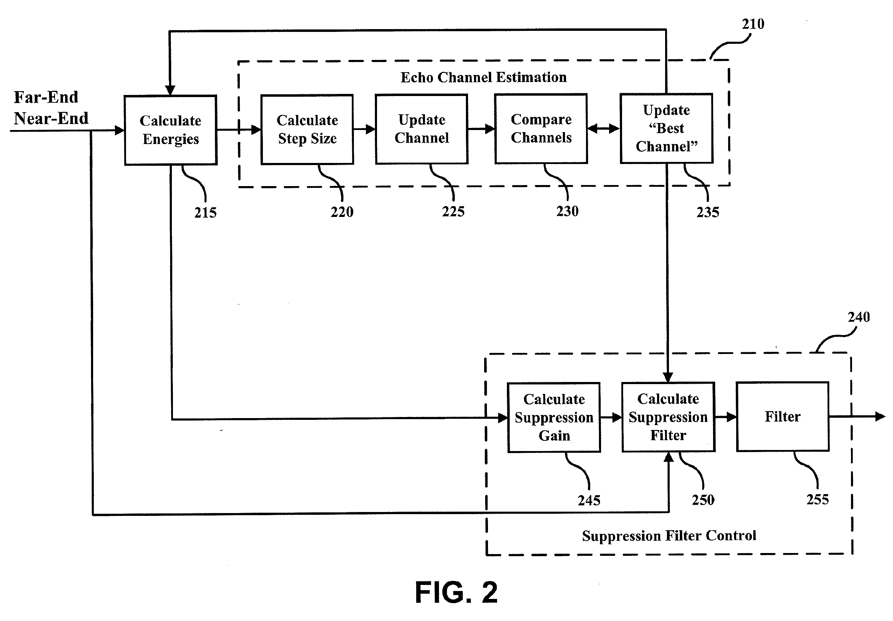

FIG. 2 is a flow chart illustrating an example process for echo suppression according to one or more embodiments of the disclosure. At least in the example shown, the process starts at step 215 where energies of a far-end signal and a near-end signal (e.g., far-end signal 115 and near-end signal 105 shown in FIG. 1) are calculated. In one arrangement, the energies of the far-end and near-end signals may be calculated in step 215 using an energy calculation unit of an acoustic echo suppressor (e.g., energy calculation unit 145 of acoustic echo suppressor 140 shown in FIG. 1).

The echo suppression process illustrated in FIG. 2 may include two main sub-processes. The first sub-process may be echo channel estimation 210 and the second sub-process may be suppression filter control 240. As shown, each of these two main sub-processes may include certain steps that together form part of the echo suppression process. Echo channel estimation 210 may include steps of calculating adaptation step size 220, updating the echo channel 225, and comparing channels 230, where a comparison is made between the currently stored channel (e.g., the "best channel" update in step 235 of the process) and the adaptive channel that is output from the update channel step 225. Additionally, suppression filter control 240 may include steps of calculating a suppression gain 245, calculating a suppression filter 250, and filtering 255 (e.g., to suppress the echo in the near-end signal (e.g., echo 110 in near-end signal 105 shown in FIG. 1)).

The update "best channel" step 235 includes, in at least some arrangements, storing the best echo channel for use in estimating the echo in the near-end signal in a memory (e.g., memory 155 shown in FIG. 1). In one example, storing the best channel in step 235 is based on the channel comparison step 230, since in some instances the currently stored channel will remain the "best channel" stored in memory while in other instances the adaptive channel from step 225 may instead become the stored "best channel" in step 235.

Various steps comprising the echo suppression process illustrated in FIG. 2 will be described in greater detail below.

Echo Channel Estimation

Various embodiments of the echo suppression algorithm and apparatus described herein involve obtaining an estimate of the echo in the near-end signal (e.g., the microphone signal) by processing the far-end signal (e.g., the loudspeaker signal) through a filter. This filter is referred to herein as the "echo channel," and because it is uncertain how the signal has evolved from the far-end to the near-end (e.g., from the loudspeaker to the microphone), the echo channel is estimated. In different scenarios the echo channel may be estimated in the time domain, the frequency domain, or in any other transform domain, from a set of data pairs (e.g., far-end, near-end pairs). The estimation may be performed for every new set of data pairs. In one embodiment of the present disclosure, the echo channel is estimated on a block-by-block basis. As used herein, "blocks" refer to groups of sampled signals of a certain size (e.g., sixty-four samples) into which a frame has been divided. Additionally, instead of estimating the complete channel (e.g., both magnitude and phase), the echo channel estimation process described herein operates only on the magnitude of the channel.

The underlying (e.g., linear) model for echo channel estimation in the time domain is as follows:

$$y(t) = s(t) + h * x(t)$$

where $x(t)$ is the far-end signal, $h$ is the echo channel that is convoluted with the far-end signal, $s(t)$ is the near-end speech part of the signal that is to be retained after removing the echo, and $y(t)$ is the near-end signal that is measured. Accordingly, an aim of the process is to estimate $h$.

To operate in the frequency domain, a Discrete Fourier Transform (DFT) may be applied on a block of data (e.g., a group of sampled signals, which in some arrangements may be sixty-four samples in size). Following such a transform, the model becomes:

$$Y(k,n) = S(k,n) + H(k)X(k,n)$$

These are now complex valued signals, where $k$ is the frequency index and $n$ the block index.

As described above, in at least some embodiments only the magnitude is involved in the echo channel estimation. Estimating only the magnitude of the echo channel is one example of how computational complexity may be reduced so as to improve performance of the present echo suppression algorithm in mobile audio devices (e.g., mobile telephones, recording devices, etc.). Relying on the assumption of near-end speech and echo being uncorrelated, the following approximation can be made:

$$\left| Y(k,n) \right| = \left| S(k,n) \right| + \left( \left| H(k) \right| \bullet \left| X(k,n) \right| \right)$$

The above expression represents the starting point of the echo channel estimation model described herein, with the goal being to obtain an estimate of $|H(k)|$.

A recursive algorithm may, at update distance $n$, be expressed as:

$$w_n = w_{n-1} + \Delta w_{n-1}$$

which, when applied to the echo channel filter described herein, may be expressed as:

$$\left| \hat{H}_n(k) \right| = \left| \hat{H}_{n-1}(k) \right| + \Delta \left| \hat{H}_{n-1}(k) \right|$$

The echo channel estimation approach described herein proposes an energy-based control of parameters in $\Delta|\hat{H}_{n-1}(k)|$. In one example, such a parameter could be the step size in a least mean squares (LMS) algorithm. Although LMS is a conventional method used in adaptive signal processing, the echo channel estimation approach of the present disclosure implements an LMS method, but with an additional control of the step size. Stated differently, the approach described herein applies a normalized LMS (NLMS) method, but with a different kind of normalization to incorporate the echo significance through control of the step size.

In the example context of a mobile device, the acoustic echo situation can be severe in terms of signal to noise ratio (SNR), and the echo channel can vary a significant amount. As such, in such a context it is important to update the channel when a strong echo is present. The NLMS method described herein aims to level out the effect of differences in the input level, and thus lower the significance when strong echoes are present. As will be described in greater detail below, the control of the adaptation step size is based on the far-end energy and the significance of the update term increases when a strong echo is present.

LMS Method

The update procedure, for every block $n$, of the LMS method described herein looks like the following:

$$\Delta \left| \hat{H}_{n-1}(k) \right| = \mu_n(k) \bullet \left| X(k,n) \right| \bullet \left( \left| Y(k,n) \right| - \left| \hat{H}_{n-1}(k) \right| \bullet \left| X(k,n) \right| \right)$$

where $\mu_n(k)$ is the step size that is to be controlled. In standard LMS, the step size is typically constant for all blocks and frequencies. For the standard NLMS algorithm, the step size varies from block to block due to input signal normalization, but not with frequency.

Pre-Processing

The step size value is based on far-end signal energy, which may be represented as the magnitude summed over all frequencies. While this is not strictly "energy" (e.g., it is the logarithm of energy) the energy notion is used and therefore input is calculated as:

$$E_x(n) = \log\left[ \sum_{k=a}^{b} \left| X(k,n) \right| \right]$$

where, in different embodiments, a sub-band (a, b) or the full band may be used. This calculation may be performed for any kind of signal (e.g., near-end signal, estimated echo signal, etc.).

Step Size Function

Embodiments of the present disclosure relate to an adaptive algorithm that utilizes an increasing function with the far-end energy $\mu_n(k) = f(E_x(n),k)$ to increase significance with increasing echo energy. In one arrangement, an instantaneous approach may be taken using only $E_x(n)$, while in another arrangement the step size function may be further generalized so as to take into account a backlog, $\{E_x(n)\}$, in time:

$$\mu_n(k) = f(\{E_x(n)\},k)$$

In at least one implementation, the echo channel estimation approach described herein first checks if $E_x(n) < E_{min}(n)$, in which case $\mu_n(k) = 0$. If this expression is not true, then the following relation is used:

$$\mu_n(k) = 2^{-\eta} / (k + 1)$$

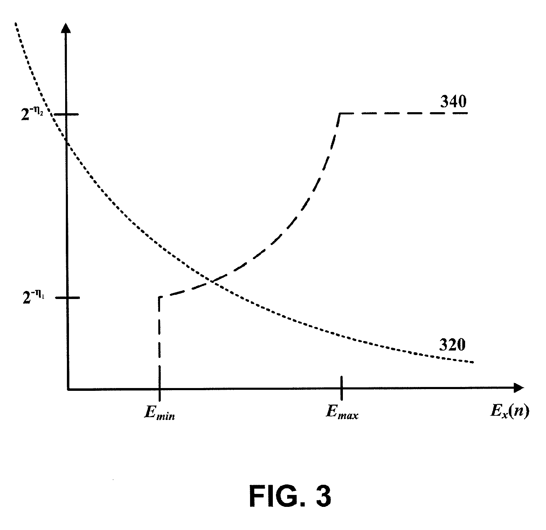

where $\eta = \eta_1 + (\eta_2 - \eta_1) \bullet (E_x(n) - E_{min}(n)) / (E_{max}(n) - E_{min}(n))$. With reference to FIG. 3, the above expression is represented by dashed line 340, which will be described in greater detail below.

FIG. 3 is a graphical representation of an example step size function according to one or more of the embodiments described herein. In the graph illustrated, the dashed line 340 represents $\mu_n(k)$ as a function of $E_x(n)$. The dotted curve 320 represents the standard normalization in NLMS, for comparison with dashed line 340.

In one or more embodiments of the disclosure, two parallel echo channel filters are used in the echo suppression algorithm. One of the echo channel filters is continuously adapted based on calculated energy of the far-end signal (referred to herein as the "adaptive filter" or "adaptive echo channel") while the other channel filter is stored (referred to herein as the "stored filter" or "stored echo channel"). In describing the various aspects and features of the parallel channel filters, the terms "channel" and "filter" are sometimes used interchangeably since, as described above, the echo channel is the filter through which the far-end signal is processed to obtain an estimate of the echo in the near-end signal.

In at least one embodiment, the stored echo channel is the channel that is used to estimate the echo in the near-end signal. Additionally, the adaptive echo channel may replace the stored channel in response to certain criteria being met. For example, if the adaptive channel has been stable for a period of time (e.g., 400 milliseconds (ms)) and it is better (e.g., more precisely estimates the echo part of the near-end signal) than the existing stored channel, then the stored channel is updated accordingly. On the other hand, if after comparing the adaptive channel with the stored channel it is found that the stored channel is better, then the adaptive channel may be reset with the stored channel and the stored channel remains the same. With reference to FIG. 2, the "best channel" update in step 235 may include a process similar to that described above, where the stored channel is used for estimating the echo in the near-end signal.

Suppression Filter Construction And Suppression Gain Parameter Control

Further aspects and embodiments of the present disclosure relate to a process for deriving an echo suppression filter (e.g., a Wiener filter) that may be configured to suppress echo in the near-end signal. As will be further described below, the echo suppression filter may include a controllable suppression gain parameter, $\gamma$, that may be used, for example, to control the aggressiveness of the echo suppression. In at least one embodiment, an echo estimation error measurement may be obtained or calculated based on the estimated echo in the near-end signal. In such an embodiment, the suppression gain parameter may vary as a function of the measured echo estimation error.

For example, a Wiener filter used as an interference (e.g., echo) suppressor may be modified and generalized for real-time applications as follows:

$$W_n(k) = \left(1 - \gamma \frac{\left|\hat{I}_n(k)\right|^\alpha}{\left|Y_n(k)\right|^\alpha}\right)^{1/\alpha}$$

where the values of $W_n(k)$ are truncated to the interval [0,1]. The truncation is performed to avoid adding a gain to the signal. In the above expression, the interference $|\hat{I}_n(k)|$ is an estimate of the echo. This expression may be generalized even further to include control of the suppression gain parameter $\gamma$ as:

$$W_n(k) = \left(1 - \gamma_n(k) \frac{\left|\hat{I}_n(k)\right|^\alpha}{\left|Y_n(k)\right|^\alpha}\right)^{1/\alpha}$$

(e.g., for complexity reasons $\alpha = 1$ is used; however, $\alpha = 2$ may similarly be used in one or more embodiments). The above expression including the controllable suppression gain parameter may be used in one or more embodiments described herein to suppress the estimated echo in the near-end signal (e.g., suppress the frequency bands of the near-end signal where echo is present).

At least one embodiment of the disclosure provides for energy-based control of the suppression gain parameter. While some conventional approaches for acoustic echo suppression set the suppression gain parameter to a constant value, the present disclosure implements a suppression filter construction/derivation process in which a controllable suppression gain is used. For example, suppressing the near-end signal according to the methods described herein may also distort the signal since the echo and the desired audio share at least part of the frequency band of the signal. As such, when no echo is present in a given near-end signal, it is desirable to pass the near-end signal unchanged ($\gamma = 0$). Similarly, when only echo is present in the near-end signal, it is desirable to suppress the signal completely ($\gamma = \infty$). In scenarios where the near-end signal includes both echo and speech at the same time, the approach described herein aims to control the suppression gain parameter ($0 < \gamma < \infty$).

Some embodiments described herein apply an adaptive procedure for calculating the controllable suppression gain parameter, such as the following:

$$\gamma_n(k) = \gamma_{n-1}(k) + a(g(\{E_s\}, \{E_y\}, k) - \gamma_{n-1}(k))$$

where "a" is a smoothing parameter and $g()$ is a decreasing function with respect to the difference between the energy of the echo estimate $E_s$ and the energy of the near-end signal $E_y$. Further, the energy of the far-end signal $E_x$ may be used for echo activity detection, and therefore $\gamma_n(k) = 0$ when no echo is present.

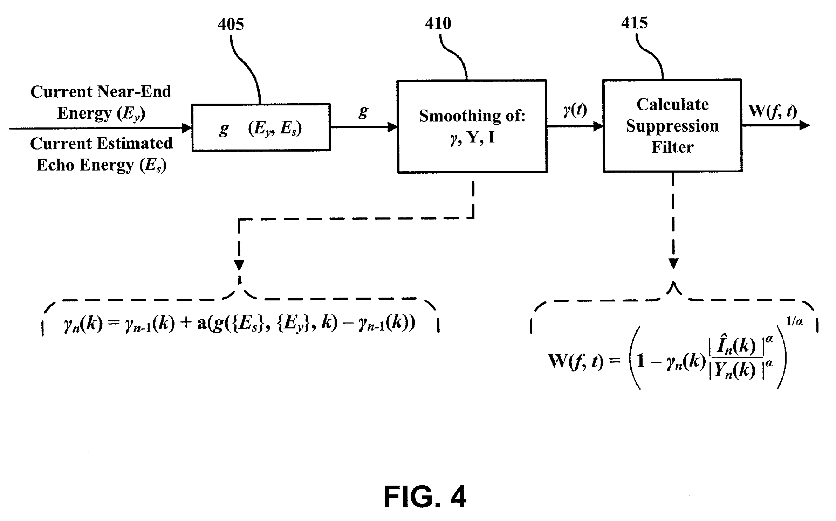

FIG. 4 illustrates an example process for deriving (e.g., constructing) the suppression filter according to at least some embodiments described herein. In at least one embodiment, the process illustrated in FIG. 4 may be performed by a suppression filter unit (e.g., suppression filter unit 125 shown in FIG. 1). As shown in block 405, the function g() is based on the (current) energy of the near-end signal $E_y$ and the (current) energy of the estimated echo $E_s$ in the near-end signal. In block 410, the near-end signal Y and the estimated echo I are smoothed (e.g., a smoothing parameter is applied to each energy value), which therefore also smoothes the controllable suppression gain parameter γ as shown in the expression leading out from block 410. For example, the suppression gain parameter γ may be smoothed to remove large variations, and the near-end signal Y and estimated echo I may be smoothed to ensure that the filter variance is not too high, which could result in, for example, watery audio effects. In block 415 the suppression filter (e.g., Wiener filter) is calculated using the controllable suppression gain parameter γ as shown in the expression leading out of block 415.

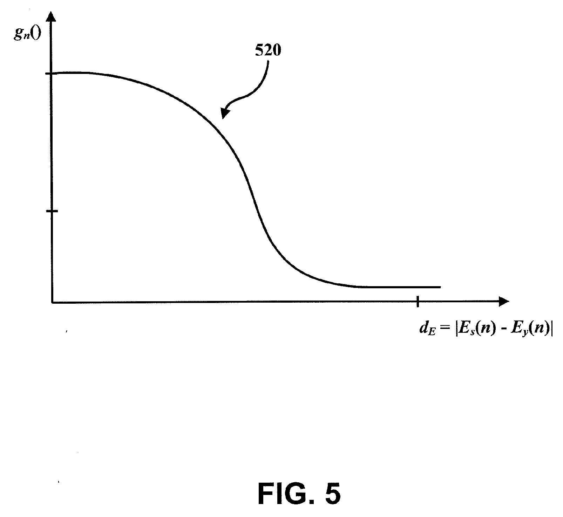

FIG. 5 illustrates an example graphical representation of the decreasing function g() according to some embodiments of the disclosure. A mathematical description of *g()* may be the following:

$$g(\{E_s\}, \{E_y\}, k) = \max(g_n(d_E, k), g_{n-1}(d_E, k))$$

where $g_n(k)$ is displayed as curve 520. In some implementations, such as the example shown in FIG. 5, the frequency dependency is removed, while in other implementations the dependency is retained. As shown, curve 520 decreases as the difference between the energy of the estimated echo $E_s$ and the energy of the near-end signal $E_y$ increases. This relation is expressed in the following: $d_E = |E_s(n) - E_y(n)|$. In at least some embodiments, the value $d_E$ represents an echo estimation error, which may be used as a basis for calculating the controllable suppression gain parameter described above.

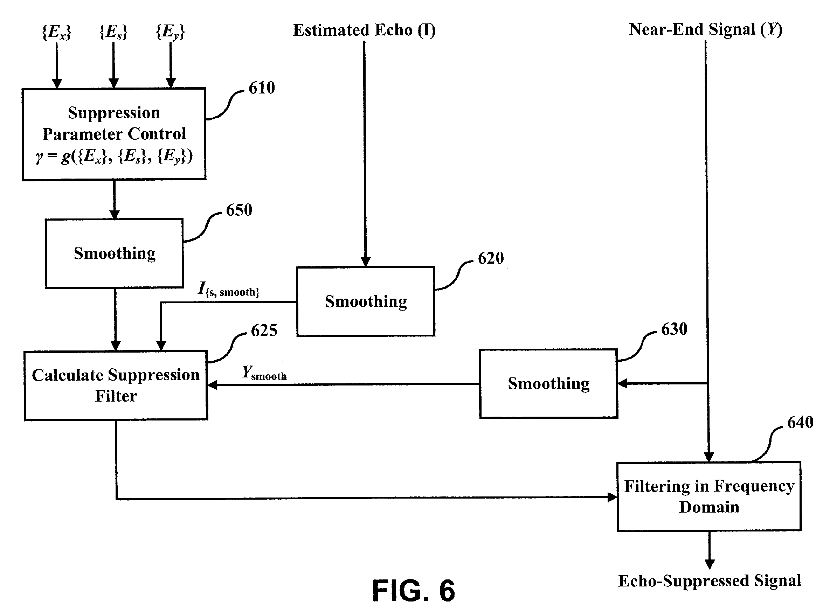

FIG. 6 illustrates an example of energy-based suppression filter control according to one or more embodiments of the disclosure. A near-end signal (*Y*) (e.g., near-end signal 105 shown in FIG. 1) and an estimated echo (*e*) in the near-end signal (e.g., echo 110 shown in FIG. 1 as estimated according to the echo channel estimation method described herein) may be passed to smoothing blocks 630 and 620, respectively, where the near-end signal and the estimated echo are smoothed (e.g., filtered). The near-end signal and the estimated echo are smoothed in blocks 620 and 630 so that, for example, a smoother suppression filter can be calculated in block 625. For example, the near-end signal and estimated echo may be smoothed to prevent the filter variance from being too high during echo suppression, which can cause muffled audio effects.

Smoothing block 620 outputs a smoothed estimated echo $I_{\{s, smooth\}}$, while smoothing block 630 outputs a smooth near-end signal $Y_{smooth}$, each output going to block 625 for calculation of the suppression filter. In addition to receiving the outputs from smoothing blocks 620 and 630, the calculate suppression filter block 625 also receives input from suppression parameter control block 610. In at least the example illustrated in FIG. 6, the suppression parameter control block 610 calculates a controllable suppression gain parameter γ as a function (e.g., function g()) of three energy values: $\{E_x\}$, $\{E_s\}$, and $\{E_y\}$, where $\{E_x\}$ is the energy of the far-end signal (e.g., the energy of far-end signal 160 shown in FIG. 1), $\{E_s\}$ is the energy of the estimated echo of the near-end signal, and $\{E_y\}$ is the energy of the near-end signal. The controllable suppression gain parameter γ calculated in block 610 may also be input into block 625 to calculate the suppression filter. Using the controllable suppression gain parameter γ as an input into the calculation of the suppression filter allows the amount (e.g., aggressiveness) of the echo suppression to be controlled in an adaptive manner such that, for example, the near-end signal is not distorted through suppression when no echo is present, the near-end signal is fully suppressed when only echo is present, and the like. The calculated suppression filter from block 625 is passed to the filtering in frequency domain block 640 along with the near-end signal (*Y*), where the output is an echo-suppressed signal.

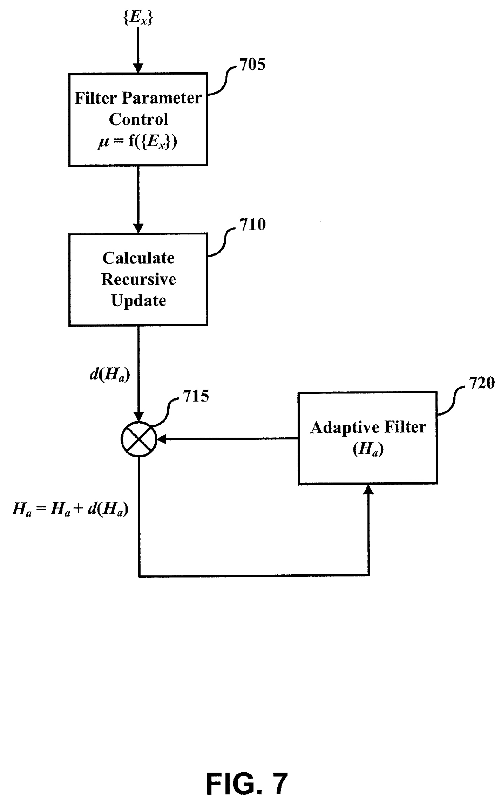

FIG. 7 illustrates an example process for updating an adaptive filter (e.g., adaptive echo channel estimate) based on a calculated energy of the far-end signal $E_x$. As described above, in at least one embodiment of the disclosure, two parallel channel filters (where channel filters are also referred to herein as "echo channel estimates," or simply "echo channels") may be used in the echo channel estimation algorithm. One of these filters, the "adaptive filter" (also referred to as the "adaptive echo channel estimate") is continuously adapted/updated based on the far-end signal energy $E_x$. The other parallel channel filter, the "stored filter" (also referred to as the "stored echo channel estimate"), is the filter used to estimate the echo in the near-end signal (e.g., using the NLMS algorithm described above (also referred to herein as the "adaptive algorithm") with the controllable step size that varies as a function of the far-end signal energy).

The far-end signal energy $E_x$ is used in block 705 of the process illustrated in FIG. 7 to control the adaptive filter parameter. In at least the embodiment shown, the adaptive filter parameter controlled in block 705 is the step size μ, which is used as part of the NLMS algorithm described above to estimate the echo channel, and is controlled as a function of the far-end signal energy, $μ = f(\{E_x\})$. In block 710, a recursive update for the echo channel estimate is calculated using the value of the controlled step size from block 705.

The calculated recursive update from block 710, $dH_a$, and the echo estimate from the adaptive filter $H_a$, are passed to combination (e.g., summation) point 715. In at least one embodiment, the recursive update and the echo estimate from the adaptive filter are used according to the expression $H_a = H_a + dH_a$, with the resulting value of the echo estimate $H_a$ being passed back to the adaptive filter at block 720.

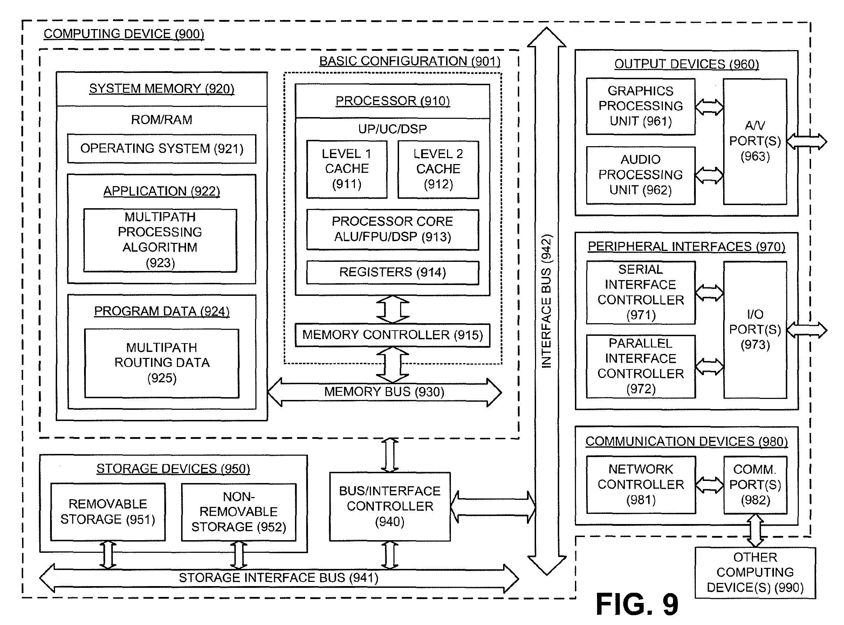

FIG. 9 is a block diagram illustrating an example computing device 900 that is arranged for multipath routing in accordance with one or more embodiments of the present disclosure. In a very basic configuration 901, computing device 900 typically includes one or more processors 910 and system memory 920. A memory bus 930 may be used for communicating between the processor 910 and the system memory 920.

Depending on the desired configuration, processor 910 can be of any type including but not limited to a microprocessor ($\mu$P), a microcontroller ($\mu$C), a digital signal processor (DSP), or any combination thereof. Processor 910 may include one or more levels of caching, such as a level one cache 911 and a level two cache 912, a processor core 913, and registers 914. The processor core 913 may include an arithmetic logic unit (ALU), a floating point unit (FPU), a digital signal processing core (DSP Core), or any combination thereof. A memory controller 915 can also be used with the processor 910, or in some embodiments the memory controller 915 can be an internal part of the processor 910.

Depending on the desired configuration, the system memory 920 can be of any type including but not limited to volatile memory (e.g., RAM), non-volatile memory (e.g., ROM, flash memory, etc.) or any combination thereof. System memory 920 typically includes an operating system 921, one or more applications 922, and program data 924. In at least some embodiments, application 922 includes a multipath processing algorithm 923 that is configured to pass a far-end signal (e.g., far-end signal 115 shown in FIG. 1) to an acoustic echo suppressor (e.g., acoustic echo suppressor 140 shown in FIG. 1). The multipath processing algorithm is further arranged to pass a near-end signal and a far-end signal (e.g., near-end signal 105 and far-end signal 115 shown in FIG. 1) to a channel estimation unit and a suppression filter unit (e.g., channel estimation unit 120 and suppression filter unit 125 shown in FIG. 1) where echo channel estimation processes may be performed to estimate an echo of the near-end signal and an echo suppression filter may be derived to suppress the estimated echo in the near-end signal.

Program Data 924 may include multipath routing data 925 that is useful for passing a far-end signal along multiple pathways to, for example, an acoustic echo suppressor and a render device (e.g., render device 160 shown in FIG. 1). In some embodiments, application 922 can be arranged to operate with program data 924 on an operating system 921 such that a received far-end signal is directed to a discrete Fourier Transform (DFT) component (e.g., DFT component 170 shown in FIG. 1) for transformation from the time-domain to the frequency-domain before being passed to an energy calculation unit (e.g., energy calculation unit 145 shown in FIG. 1) for calculation of an energy value.

Computing device 900 can have additional features and/or functionality, and additional interfaces to facilitate communications between the basic configuration 901 and any required devices and interfaces. For example, a bus/interface controller 940 can be used to facilitate communications between the basic configuration 901 and one or more data storage devices 950 via a storage interface bus 941. The data storage devices 950 can be removable storage devices 951, non-removable storage devices 952, or any combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), tape drives and the like. Example computer storage media can include volatile and nonvolatile, removable and non-removable media implemented in any method or technology for storage of information, such as computer readable instructions, data structures, program modules, and/or other data.

System memory 920, removable storage 951 and non-removable storage 952 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 900. Any such computer storage media can be part of computing device 900.

Computing device 900 can also include an interface bus 942 for facilitating communication from various interface devices (e.g., output interfaces, peripheral interfaces, communication interfaces, etc.) to the basic configuration 901 via the bus/interface controller 940. Example output devices 960 include a graphics processing unit 961 and an audio processing unit 962 (e.g., acoustic echo suppressor 140 shown in FIG. 1), which can be configured to communicate to various external devices such as a display or speakers via one or more A/V ports 963. Example peripheral interfaces 970 include a serial interface controller 971 or a parallel interface controller 972, which can be configured to communicate with external devices such as input devices (e.g., keyboard, mouse, pen, voice input device, touch input device, etc.) or other peripheral devices (e.g., printer, scanner, etc.) via one or more I/O ports 973. An example communication device 980 includes a network controller 981, which can be arranged to facilitate communications with one or more other computing devices 990 over a network communication (not shown) via one or more communication ports 982. The communication connection is one example of a communication media. Communication media may typically be embodied by computer readable instructions, data structures, program modules, or other data in a modulated data signal, such as a carrier wave or other transport mechanism, and includes any information delivery media. A "modulated data signal" can be a signal that has one or more of its characteristics set or changed in such a manner as to encode information in the signal. By way of example, and not limitation, communication media can include wired media such as a wired network or direct-wired connection, and wireless media such as acoustic, radio frequency (RF), infrared (IR) and other wireless media. The term computer readable media as used herein can include both storage media and communication media.

Computing device 900 can be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions. Computing device 900 can also be implemented as a personal computer including both laptop computer and non-laptop computer configurations.

There is little distinction left between hardware and software implementations of aspects of systems; the use of hardware or software is generally (but not always, in that in certain contexts the choice between hardware and software can become significant) a design choice representing cost versus efficiency tradeoffs. There are various vehicles by which processes and/or systems and/or other technologies described herein can be effected (e.g., hardware, software, and/or firmware), and the preferred vehicle will vary with the context in which the processes and/or systems and/or other technologies are deployed. For example, if an implementer determines that speed and accuracy are paramount, the implementer may opt for a mainly hardware and/or firmware vehicle; if flexibility is paramount, the implementer may opt for a mainly software implementation. In one or more other scenarios, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof.

In one or more embodiments, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments described herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof. Those skilled in the art will further recognize that designing the circuitry and/or writing the code for the software and/or firmware would be well within the skill of one of skilled in the art in light of the present disclosure.

Additionally, those skilled in the art will appreciate that the mechanisms of the subject matter described herein are capable of being distributed as a program product in a variety of forms, and that an illustrative embodiment of the subject matter described herein applies regardless of the particular type of signal-bearing medium used to actually carry out the distribution. Examples of a signal-bearing medium include, but are not limited to, the following: a recordable-type medium such as a floppy disk, a hard disk drive, a Compact Disc (CD), a Digital Video Disk (DVD), a digital tape, a computer memory, etc.; and a transmission-type medium such as a digital and/or an analog communication medium (e.g., a fiber optic cable, a waveguide, a wired communications link, a wireless communication link, etc.).

Those skilled in the art will also recognize that it is common within the art to describe devices and/or processes in the fashion set forth herein, and thereafter use engineering practices to integrate such described devices and/or processes into data processing systems. That is, at least a portion of the devices and/or processes described herein can be integrated into a data processing system via a reasonable amount of experimentation. Those having skill in the art will recognize that a typical data processing system generally includes one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity; control motors for moving and/or adjusting components and/or quantities). A typical data processing system may be implemented utilizing any suitable commercially available components, such as those typically found in data computing/communication and/or network computing/communication systems.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

**Claims**

1. A method for echo suppression comprising:

   calculating (215), by an echo suppressor (140), energy of a far-end signal (115) and energy of a near-end signal (105) in a signal transmission path;
   adjusting (220) a step size value of an adaptive filter algorithm using the calculated energy of the far-end signal (115);
   updating (225-235) an estimate of an echo channel from the far-end signal (115) to the near-end signal (105) using the adaptive filter algorithm; and
   estimating (210) an echo in the near-end signal (105) using the updated estimate of the echo channel;

   **characterized in that** the method further comprises:

   calculating (245) a controllable suppression gain parameter as a function of the energy of the far-end signal (115), the energy of the near-end signal (105), and energy of the estimated echo in the near-end signal;
   deriving (250) a suppression filter using the near-end signal (105), the estimated echo in the near-end signal, and the controllable suppression gain parameter;
   suppressing (255) the estimated echo in the near-end signal using the suppression filter; and
   updating the controllable suppression gain parameter as a decreasing function of the difference between the energy of the estimated echo in the near-end signal and the energy of the near-end signal (105).

2. The method of claim 1, wherein the step size value is adjusted as a function of the calculated energy of the far-end signal (115), the function being an increasing function within a range of energy values.

3. The method of claim 1 or 2, wherein updating the estimate of the echo channel includes:

   updating (225) an adaptive echo channel estimate using the adaptive filter algorithm;
   comparing (230) the updated adaptive echo channel estimate with a stored echo channel estimate; and
   selecting (235), based on the comparison, one of the updated adaptive echo channel estimate and the stored echo channel estimate for use in estimating the echo in the near-end signal (105).

4. The method of any one of claims 1-3, wherein the adaptive filter algorithm is a least mean squares type algorithm.

5. The method of any one of claims 1-4, wherein the estimate of the echo channel is an estimate of a magnitude of the echo channel.

6. The method of any one of claims 1-5, further comprising updating the controllable suppression gain parameter as a function of echo estimation errors and previous suppression gain parameters, the echo estimation errors being measurements of the difference between the energy of the estimated echo in the near-end signal and the energy of the near-end signal (105).

7. The method of claim 6, wherein the function is a decreasing function.

8. The method of any one of claims 1-7, wherein deriving the suppression filter includes applying a smoothing parameter to each of the near-end signal (105) and the estimated echo in the near-end signal.

9. The method of any one of claims 1-8, wherein the suppression filter is a Wiener type filter.

10. An echo suppressor (140) comprising:

    a channel estimation unit (120) configured to:

    calculate energy of a far-end signal (115) and energy of a near-end signal (105) in a signal transmission path,
    adjust a step size value of an adaptive filter algorithm using the calculated energy of the far-end signal (115),

update an estimate of an echo channel from the far-end signal (115) to the near-end signal (105) using the adaptive filter algorithm, and
estimate an echo in the near-end signal (105) using the updated estimate of the echo channel,

the echo suppressor being **characterized by**:

the channel estimation unit (120) is further configured to calculate a controllable suppression gain parameter as a function of the energy of the far-end signal (115), the energy of the near-end signal (105), and energy of the estimated echo in the near-end signal; and
a suppression filter unit (125) configured to:

derive a suppression filter using the near-end signal (105), the estimated echo in the near-end signal, and the controllable suppression gain parameter,
suppress the estimated echo in the near-end signal using the suppression filter, and
update the controllable suppression gain parameter as a decreasing function of the difference between the energy of the estimated echo in the near-end signal and the energy of the near-end signal (105).

11. The echo suppressor of claim 10, wherein the step size value is adjusted as a function of the calculated energy of the far-end signal (115), the function being an increasing function within a range of energy values.

12. The echo suppressor of claim 10 or 11, wherein the channel estimation unit (120) is further configured to:

update an adaptive echo channel estimate using the adaptive filter algorithm;
compare the updated adaptive echo channel estimate with a stored echo channel estimate; and
select, based on the comparison, one of the updated adaptive echo channel estimate and the stored echo channel estimate for use in estimating the echo in the near-end signal (105).

13. The echo suppressor of any one of claims 10-12, wherein the adaptive filter algorithm is a least mean squares type algorithm.

14. The echo suppressor of any one of claims 10-13, wherein the estimate of the echo channel is an estimate of a magnitude of the echo channel.

15. The echo suppressor of any one of claims 10-14, wherein the suppression filter unit (125) is further configured to update the controllable suppression gain parameter as a function of echo estimation errors and previous suppression gain parameters, the echo estimation errors being measurements of the difference between the energy of the estimated echo in the near-end signal and the energy of the near-end signal (105).

16. The echo suppressor of claim 15, wherein the function is a decreasing function.

17. The echo suppressor of any one of claims 10-16, wherein the suppression filter unit (125) is further configured to apply a smoothing parameter to the energy of the near-end signal (105) and the energy of the estimated echo in the near-end signal.

18. The echo suppressor of any one of claims 10-17, wherein the suppression filter is a Wiener type filter.

**Patentansprüche**

1. Verfahren zur Echounterdrückung, das Folgendes umfasst:

das Berechnen (215) der Energie eines Fernsignals (115) und der Energie eines Nahsignals (105) durch einen Echounterdrücker (140) in einem Signalübertragungspfad;
das Anpassen (220) eines Schrittgrößenwerts eines adaptiven Filteralgorithmus unter Verwendung des Fernsignals (115);
das Aktualisieren (225-235) eines Schätzwerts eines Echokanals vom Fernsignal (115) zum Nahsignal (105) unter Verwendung des adaptiven Filteralgorithmus; und
das Schätzen (210) eines Echos im Nahsignal (105) unter Verwendung des aktualisierten Schätzwerts des Echokanals;

**dadurch gekennzeichnet, dass** das Verfahren weiterhin umfasst:

das Berechnen (245) eines kontrollierbaren Parameters der Unterdrückungsverstärkung als Funktion der Energie des Fernsignals (115), der Energie des Nahsignals (105) und der Energie des geschätzten Echos im Nahsignal;
das Ableiten (250) eines Unterdrückungsfilters unter Verwendung des Nahsignals (105), des geschätzten Echos im Nahsignal und des kontrollierbaren Parameters der Unterdrückungsverstärkung;
das Unterdrücken (255) des geschätzten Echos im Nahsignal unter Verwendung des Unterdrückungsfilters; und
das Aktualisieren des kontrollierbaren Parameters der Unterdrückungsverstärkung als eine fallende Funktion der Differenz zwischen der Energie des geschätzten Echos im Nahsignal und der Energie des Nahsignals (105).

2. Verfahren nach Anspruch 1, worin der Schrittgrößenwert als Funktion der berechneten Energie des Fernsignals (115) angepasst ist, wobei die Funktion eine steigende Funktion innerhalb eines Energiewertebereichs ist.

3. Verfahren nach Anspruch 1 oder 2, worin das Aktualisieren der Schätzung des Echokanals folgendes beinhaltet:

das Aktualisieren (225) einer Adaptiven Schätzung eines Echokanals unter Verwendung des adaptiven Filteralgorithmus;
das Vergleichen (230) der aktualisierten adaptiven Schätzung des Echokanals mit einer gespeicherten Schätzung des Echokanals; und
das Auswählen (235), basierend auf dem Vergleich, entweder der aktualisierten adaptiven Schätzung des Echokanals oder der gespeicherten Schätzung des Echokanals zur Verwendung bei der Schätzung des Echos im Nahsignal (105).

4. Verfahren nach irgendeinem der Ansprüche 1-3,
worin der adaptive Filteralgorithmus ein Algorithmus vom Typ Least-Mean-Squares ist.

5. Verfahren nach irgendeinem der Ansprüche 1-4, worin die Schätzung des Echokanals eine Schätzung einer Stärke des Echokanals ist.

6. Verfahren nach irgendeinem der Ansprüche 1-5, das ferner das Aktualisieren des kontrollierbaren Parameters der Unterdrückungsverstärkung als eine Funktion von Echoschätzfehlern und vorherigen Parametern der Unterdrückungsverstärkung umfasst, wobei die Echoschätzfehler Messungen der Differenz zwischen der Energie des geschätzten Echos im Nahsignal und der Energie des Nachsignals (105) ist.

7. Verfahren nach Anspruch 6, worin die Funktion eine fallende Funktion ist.

8. Verfahren nach irgendeinem der Ansprüche 1-7, worin das Ableiten der Unterdrückungsfilter das Anwenden eines Glättungsparameters auf sowohl das Nahsignal (105) als auch die Schätzung des Echos im Nahsignal beinhaltet.

9. Verfahren nach irgendeinem der Ansprüche 1-8, worin der Unterdrückungsfilter ein Filter vom Typ Wiener ist.

10. Echounterdrücker (140), der Folgendes umfasst:

eine Kanalschätzeinheit (120), die entsprechend konfiguriert ist, um Folgendes zu tun:

Berechnen der Energie eines Fernsignals (115) und der Energie eines Nahsignals (105) in einem Signalübertragungspfad,
Anpassen eines Schrittgrößenwerts eines adaptiven Filteralgorithmus unter Verwendung der berechneten Energie des Fernsignals (115),
Aktualisieren eines Schätzwerts eines Echokanals vom Fernsignal (115) zum Nahsignal (105) unter Verwendung des adaptiven Filteralgorithmus, und
Schätzen eines Echos im Nahsignal (105) unter Verwendung des aktualisierten Schätzwerts des Echokanals,
wobei der Echounterdrücker **dadurch gekennzeichnet ist, dass**:

die Kanalschätzeinheit (120) ferner zur Berechnung eines kontrollierbaren Parameters der Unterdrückungsverstärkung als Funktion der Energie des Fernsignals (115), der Energie des Nahsignals (105) und der Energie des geschätzten Echos im Nahsignal konfiguriert ist; und
eine Unterdrückungsfiltereinheit (125), die entsprechend konfiguriert ist, um Folgendes zu tun:

Ableiten eines Unterdrückungsfilters unter Verwendung des Nahsignals (105), des geschätzten Echos im Nahsignal und des kontrollierbaren Parameters der Unterdrückungsverstärkung,
Unterdrücken des geschätzten Echos im Nahsignal unter Verwendung des Unterdrückungsfilters; und
Aktualisieren des kontrollierbaren Parameter der Unterdrückungsverstärkung als eine fallende Funktion der Differenz zwischen der Energie des geschätzten Echos im Nahsignal und der Energie des Nahsignals (105).

11. Echounterdrücker nach Anspruch 10, worin der Schrittgrößenwert als Funktion der berechneten Energie des Fernsignals (115) angepasst ist, wobei die Funktion eine steigende Funktion im Rahmen der Energiewerte ist.

12. Echounterdrücker nach Anspruch 10 oder 11, worin die Kanalschätzeinheit (120) ferner konfiguriert ist, um Folgendes zu tun:

Aktualisieren einer adaptiven Echokanalschätzung unter Verwendung des adaptiven Filteralgorithmus;
Vergleichen der aktualisierten adaptiven Echokanalschätzung mit einer gespeicherten Echokanalschätzung; und
Auswählen, basierend auf dem Vergleich, entweder der aktualisierten adaptiven Schätzung des Echokanals oder der gespeicherten Schätzung des Echokanals zur Verwendung bei der Schätzung des Echos im Nahsignal (105).

13. Echounterdrücker nach irgendeinem der Ansprüche 10-12, worin der adaptive Filteralgorithmus ein Algorithmus vom Typ Least-Mean-Squares ist.

14. Echounterdrücker nach irgendeinem der Ansprüche 10-13, worin die Schätzung des Echokanals eine Schätzung einer Stärke des Echokanals ist.

15. Echounterdrücker nach irgendeinem der Ansprüche 10-14, worin die Unterdrückungsfiltereinheit (125) ferner entsprechend konfiguriert ist, den kontrollierbaren Parameter der Unterdrückungsverstärkung als eine Funktion von Echoschätzfehlern und vorherigen Parametern der Unterdrückungsverstärkung zu aktualisieren, wobei die Echoschätzfehler Messungen der Differenz zwischen der Energie des geschätzten Echos im Nahsignal und der Energie des Nahsignals (105) ist.

16. Echounterdrücker nach Anspruch 15, worin die Funktion eine fallende Funktion ist.

17. Echounterdrücker nach irgendeinem der Ansprüche 10-16, worin die Unterdrückungsfiltereinheit (125) ferner so konfiguriert ist, einen Glättungsparameter auf sowohl die Energie des Nahsignals (105) als auch die Energie der Schätzung des Echos im Nahsignal anzuwenden.

18. Echounterdrücker nach irgendeinem der Ansprüche 10-17, worin der Unterdrückungsfilter ein Filter vom Typ Wiener ist.

**Revendications**

1. Procédé de suppression d'écho comprenant :

le calcul (215), par un suppresseur d'écho (140), de l'énergie d'un signal d'extrémité lointaine (115) et de l'énergie d'un signal d'extrémité proche (105) dans un trajet de transmission de signal ;
l'ajustement (220) d'une valeur d'incrément d'un algorithme de filtre adaptatif en utilisation l'énergie calculée du signal d'extrémité lointaine (115) ;
l'actualisation (225-235) d'une estimation d'un canal d'écho du signal d'extrémité lointaine (115) au signal d'extrémité proche (105) en utilisation l'algorithme de filtre adaptatif ; et

l'estimation (210) d'un écho dans le signal d'extrémité proche (105) en utilisant l'estimation actualisée du canal d'écho ;

**caractérisé en ce que** le procédé comprend en outre :

le calcul (245) d'un paramètre de gain de suppression réglable en tant que fonction de l'énergie du signal d'extrémité lointaine (115), de l'énergie du signal d'extrémité proche (105), et de l'énergie de l'écho estimé dans le signal d'extrémité proche ;
la dérivation (250) d'un filtre de suppression en utilisant le signal d'extrémité proche (105), l'écho estimé dans le signal d'extrémité proche, et le paramètre de gain de suppression réglable ;
la suppression (255) de l'écho estimé dans le signal d'extrémité proche en utilisant le filtre de suppression ; et
l'actualisation du paramètre de gain de suppression réglable en tant que fonction décroissante de la différence entre l'énergie de l'écho estimé dans le signal d'extrémité proche et l'énergie du signal d'extrémité proche (105).

2. Procédé selon la revendication 1, dans lequel la valeur d'incrément est ajustée en tant que fonction de l'énergie calculée du signal d'extrémité lointaine (115), la fonction étant une fonction croissante dans une fourchette de valeurs d'énergie.

3. Procédé selon la revendication 1 ou 2, dans lequel l'actualisation de l'estimation du canal d'écho inclut :

l'actualisation (225) d'une estimation adaptative du canal d'écho en utilisant l'algorithme de filtre adaptatif ;
la comparaison (230) de l'estimation de canal d'écho adaptative actualisée avec une estimation du canal d'écho stockée ; et
la sélection (235), sur la base de la comparaison, d'une de l'estimation de canal d'écho adaptative actualisée et de l'estimation de canal d'écho stockée pour une utilisation dans l'estimation de l'écho dans le signal d'extrémité proche (105).

4. Procédé selon l'une quelconque des revendications 1 à 3, dans lequel l'algorithme de filtre adaptatif est un algorithme de type moyenne quadratique minimale.

5. Procédé selon l'une quelconque des revendications 1 à 4, dans lequel l'estimation du canal d'écho est une estimation d'une magnitude du canal d'écho.

6. Procédé selon l'une quelconque des revendications 1 à 5, comprenant, en outre, l'actualisation du paramètre de gain de suppression réglable en tant que fonction des erreurs d'estimation d'écho et des paramètres de gain de suppression antérieurs, les erreurs d'estimation d'écho étant des mesures de la différence entre l'énergie de l'écho estimé dans le signal d'extrémité proche et l'énergie du signal d'extrémité proche (105).

7. Procédé selon la revendication 6, dans lequel la fonction est une fonction décroissante.

8. Procédé selon l'une quelconque des revendications 1 à 7, dans lequel la dérivation du filtre de suppression inclut l'application d'un paramètre de lissage à chacun du signal d'extrémité proche (105) et de l'écho estimé dans le signal d'extrémité proche.

9. Procédé selon l'une quelconque des revendications 1 à 8, dans lequel le filtre de suppression est un filtre de type Wiener.

10. Suppresseur d'écho (140) comprenant :

une unité d'estimation de canal (120) configurée pour :

calculer l'énergie d'un signal d'extrémité lointaine (115) et l'énergie d'un signal d'extrémité proche (105) dans un trajet de transmission de signal,
ajuster une valeur d'incrément d'un algorithme de filtre adaptatif en utilisant l'énergie calculée du signal d'extrémité lointaine (115),
actualiser une estimation d'un canal d'écho du signal d'extrémité lointaine (115) au signal d'extrémité proche (105) en utilisant l'algorithme de filtre adaptatif, et estimer un écho dans le signal d'extrémité proche (105) en utilisant l'estimation actualisée du canal d'écho,

le suppresseur d'écho étant **caractérisé en ce que** :

l'unité d'estimation de canal (120) est configurée en outre pour calculer un paramètre de gain de suppression réglable en tant que fonction de l'énergie du signal d'extrémité lointaine (115), de l'énergie du signal d'extrémité proche (105), et de l'énergie de l'écho estimé dans le signal d'extrémité proche ; et une unité de filtre de suppression (125) configurée pour :

dériver un filtre de suppression en utilisant le signal d'extrémité proche (105), l'écho estimé dans le signal d'extrémité proche, et le paramètre de gain de suppression réglable, supprimer l'écho estimé dans le signal d'extrémité proche en utilisant le filtre de suppression, et actualiser le paramètre de gain de suppression réglable en tant que fonction décroissante de la différence entre l'énergie de l'écho estimé dans le signal d'extrémité proche et l'énergie du signal d'extrémité proche (105).

11. Suppresseur d'écho selon la revendication 10, dans lequel la valeur d'incrément est ajustée en tant que fonction de l'énergie calculée du signal d'extrémité lointaine (115), la fonction étant une fonction croissante dans une fourchette de valeurs d'énergie.

12. Suppresseur d'écho selon la revendication 10 ou 11, dans lequel l'unité d'estimation de canal (120) est configurée, en outre, pour :

actualiser une estimation du canal d'écho adaptative en utilisant l'algorithme de filtre adaptatif ; comparer l'estimation de canal d'écho adaptative actualisée avec une estimation du canal d'écho stockée ; et sélectionner, sur la base de la comparaison, une de l'estimation de canal d'écho adaptative actualisée et de l'estimation de canal d'écho stockée pour une utilisation dans l'estimation de l'écho dans le signal d'extrémité proche (105).

13. Suppresseur d'écho selon l'une quelconque des revendications 10 à 12, dans lequel l'algorithme de filtre adaptatif est un algorithme de type moyenne quadratique minimale.

14. Suppresseur d'écho selon l'une quelconque des revendications 10 à 13, dans lequel l'estimation du canal d'écho est une estimation d'une magnitude du canal d'écho.

15. Suppresseur d'écho selon l'une quelconque des revendications 10 à 14, dans lequel l'unité de filtre de suppression (125) est configurée, en outre, pour actualiser paramètre de gain de suppression réglable en tant que fonction des erreurs d'estimation d'écho et de paramètres de gain de suppression antérieurs, les erreurs d'estimation d'écho étant des mesures de la différence entre l'énergie de l'écho estimé dans le signal d'extrémité proche et l'énergie du signal d'extrémité proche (105).

16. Suppresseur d'écho selon la revendication 15, dans lequel la fonction est une fonction décroissante.

17. Suppresseur d'écho selon l'une quelconque des revendications 10 à 16, dans lequel l'unité de filtre de suppression (125) est configurée, en outre, pour appliquer un paramètre de lissage à l'énergie du signal d'extrémité proche (105) et à l'énergie de l'écho estimé dans le signal d'extrémité proche.

18. Suppresseur d'écho selon l'une quelconque des revendications 10 à 17, dans lequel le filtre de suppression est un filtre de type Wiener.

**FIG. 1**

**FIG. 2**

FIG. 3

FIG. 4

$$\gamma_n(k) = \gamma_{n-1}(k) + \mathrm{a}(g(\{E_s\}, \{E_y\}, k) - \gamma_{n-1}(k))$$

$$W(f, t) = \left(1 - \gamma_n(k)\frac{|\hat{I}_n(k)|^{\alpha}}{|Y_n(k)|^{\alpha}}\right)^{1/a}$$

Current Near-End Energy ($E_y$)

Current Estimated Echo Energy ($E_s$)

405 — $g$ ($E_y$, $E_s$)

$g$

410 — Smoothing of: $\gamma$, Y, I

$\gamma(t)$

415 — Calculate Suppression Filter

$W(f, t)$

FIG. 5

EP 2 716 023 B1

$\{E_x\}$ $\{E_s\}$ $\{E_y\}$      Estimated Echo (I)      Near-End Signal ($Y$)

Suppression
Parameter Control
$\gamma = g(\{E_x\}, \{E_s\}, \{E_y\})$ — 610

Smoothing — 650

$I_{\{s,\ smooth\}}$    Smoothing — 620

Calculate Suppression
Filter — 625

$Y_{smooth}$    Smoothing — 630

Filtering in Frequency
Domain — 640

Echo-Suppressed Signal

**FIG. 6**

$\{E_x\}$

**Filter Parameter Control**
$\mu = \mathrm{f}(\{E_x\})$ — 705

**Calculate Recursive Update** — 710

$d(H_a)$

⊗ — 715

**Adaptive Filter** $(H_a)$ — 720

$H_a = H_a + d(H_a)$

# FIG. 7

FIG. 8

**FIG. 9**

COMPUTING DEVICE (900)

BASIC CONFIGURATION (901)

SYSTEM MEMORY (920)

ROM/RAM

OPERATING SYSTEM (921)

APPLICATION (922)

MULTIPATH PROCESSING ALGORITHM (923)

PROGRAM DATA (924)

MULTIPATH ROUTING DATA (925)

PROCESSOR (910)

UP/UC/DSP

LEVEL 1 CACHE (911)

LEVEL 2 CACHE (912)

PROCESSOR CORE ALU/FPU/DSP (913)

REGISTERS (914)

MEMORY CONTROLLER (915)

MEMORY BUS (930)

INTERFACE BUS (942)

OUTPUT DEVICES (960)

GRAPHICS PROCESSING UNIT (961)

AUDIO PROCESSING UNIT (962)

A/V PORT(S) (963)

PERIPHERAL INTERFACES (970)

SERIAL INTERFACE CONTROLLER (971)

PARALLEL INTERFACE CONTROLLER (972)

I/O PORT(S) (973)

STORAGE DEVICES (950)

REMOVABLE STORAGE (951)

NON-REMOVABLE STORAGE (952)

BUS/INTERFACE CONTROLLER (940)

STORAGE INTERFACE BUS (941)

COMMUNICATION DEVICES (980)

NETWORK CONTROLLER (981)

COMM. PORT(S) (982)

OTHER COMPUTING DEVICE(S) (990)

EP 2 716 023 B1

**EP 2 716 023 B1**

**Patent documents cited in the description**

- US 2004264686 A
- US 2006018460 A